# EUROPÄISCHE PATENTSCHRIFT

(11) **EP 0 501 995 B1**
(45) Veröffentlichungstag und Bekanntmachung des Hinweises auf die Patenterteilung: **02.03.1994**
(21) Anmeldenummer: 90916696.9
(22) Anmeldetag: 22.11.1990
(51) Int. Cl.: B62M 1/04

(54) **TRETROLLER**
PEDAL-DRIVEN WHEELED VEHICLE
TROTTINETTE

(30) Priorität: 23.11.1989 DE 8913827 U
(43) Veröffentlichungstag der Anmeldung: 09.09.1992
(73) Patentinhaber: STAHL, Werner, D-50674 Köln (DE)
(72) Erfinder: STAHL, Werner, D-50674 Köln (DE)
(74) Vertreter: Bauer, Wulf, Dr.
(86) Internationale Anmeldenummer: DE9000896
(87) Internationale Veröffentlichungsnummer: WO9108136

(56) Entgegenhaltungen:
- EP-A- 201 639
- DE-A- 2 758 795
- US-A- 4 026 571

## Beschreibung

Die Erfindung bezieht sich auf einen Tretroller nach dem Oberbegriff des Patentanspruchs 1.

Bei dem aus dem Dokument DE-A-2 511 663 vorbekannten Tretroller dieser Art hat das Zugelement einen ersten Endbereich, der am Antriebsrad festgelegt ist und einen zweiten Endbereich, der am Trethebel angeordnet ist. Das Zugelement wird über eine Umlenkrolle geführt, die federbelastet ist und den unbelasteten Trethebel in seine höchste Position zieht. Das Zugelement ist als Kette ausgeführt. Der Trethebel hat einen Tretarm und einen relativ langen Mitnehmerarm, hierdurch wird ein großer Kettenweg erzielt, dieser Mitnehmerarm ist aber schwer unterzubringen, er steht in tiefster Position des Tretarms des Trethebels weit nach oben gegenüber dem Hinterrad vor. Bei Rückwärtsschieben blockiert der Freilauf und wird die Kette angetrieben, dies führt zu einer Bewegung des Trethebels.

Aus der EP-A-201 639 ist ein Tretrad bekannt, das einen Rahmen hat, an dem ein lenkbares Vorderrad, ein Hinterrad und ein zwischen diesen angeordneter Trethebel drehbar gelagert sind, wobei die Lagerachsen von Trethebel und Hinterrad parallel zueinander verlaufen. Der Trethebel ist mit einem Mitnehmerrad verbunden, das mit einem flexiblen, nicht dehnbaren Zugelement, welches als Kette oder Seil ausgeführt sein kann, in Eingriff steht. Dieses Mitnehmerrad ist frei drehbar um eine parallel zu den Lagerachsen verlaufende Achse am Trethebel angeordnet. Das Zugelement steht in Eingriff mit einem dem Hinterrad zugeordneten und mit diesem über einen Freilauf verbundenen Antriebsrad. Das Zugelement hat einen ersten Endbereich, der mittels einer Feder elastisch so vorbelastet ist, daß der Trethebel in die höchste Position oberhalb des Rahmens gezogen wird. Das Zugelement hat einen zweiten Endbereich, der am Rahmen festgelegt ist.

Bei dem aus der US-A-4 026 571 vorbekannten Tretrad sind zwei Trethebel vorgesehen, die über ein O-förmig geschlossenes Zugelement miteinander und mit zwei Antriebsrädern verbunden sind. An jedem der relativ langen Trethebel ist ein Mitnehmerrad angeordnet.

Die DE-A-27 58 795 beschreibt ein Fahrrad mit einer normalen Pedalanordnung mit einer Tretachse. Im Abstand von dieser Tretachse ist an Pedalarmen ein Rollelement vorgesehen, das in einen Längsschlitz eines L-förmigen Teils eingreift, welches um eine Schwenkachse schwenkbar ist. Mit seinem anderen Arm nimmt das L-förmige Teil ein Ritzel mit, das über diesen Arm mit einer Stange in Verbindung steht. Das Ritzel treibt eine Kette, die über ein Antriebsrad geführt ist.

Bei dem Tretroller nach dem DE-GM 85 27 052 ist der Trethebel zweiarmig ausgeführt, er ist in einen Tretarm und einen gegenüber diesem wesentlich kürzeren Mitnehmerarm aufgeteilt, beide stehen etwa im rechten Winkel zueinander. Am Mitnehmerarm ist eine Stange angelenkt, die an ihrem anderen Ende mit dem kürzeren Arm eines zweiarmigen, am Rahmen gelagerten Hebels in Gelenkverbindung steht. Am längeren Arm dieses Hebels ist der zweite Endbereich der Kette fixiert, an ihrem ersten Endbereich greift die als Schraubenfeder ausgebildete Feder an, die die Kette dergestalt zieht, daß der Tretarm des Trethebels in seine höchste Position vorbelastet wird.

Bei den vorbekannten Treträdern und Tretrollern ist es nachteilig, daß das Zugmittelgetriebe blockiert, wenn der Tretroller bzw. das Tretrad rückwärts geschoben wird. Darüberhinaus wird nur ein bestimmter Teilbereich des Zugelementes für den Antrieb benutzt, was zu einer erhöhten Abnutzung und insbesondere durch das Zusammentreffen der gleichen Teilstücke des Zugelements mit immer demselben Teilbereich des Antriebsrades zu einem lokalen Verschleiß führt.

Hier setzt nun die Erfindung an. Sie hat es sich zur Aufgabe gemacht, einen Tretroller dahingehend weiterzubilden, daß er rückwärts geschoben werden kann, ohne daß dabei der Trethebel angetrieben wird.

Diese Aufgabe wird gelöst durch einen Tretroller mit den Merkmalen des Patentanspruchs 1.

Das Zugelement des Zugmittelgetriebes des Tretrollers kann ein einfaches Seil, ein Flach-, Keil- oder Rundriemen sein. In einer anderen Ausbildung ist das Zugelement eine Kette, ein Zahnriemen oder dergleichen.

Als sehr vorteilhaft hat es sich erwiesen, das Mitnehmerrad unmittelbar an dem Trethebel anzuordnen. Bei einem einarmigen Trethebel ist es unmittelbar mit diesem verbunden, bei einem zweiarmigen Trethebel ist das Mitnehmerrad am gegenüber dem Tretarm kürzeren Mitnehmerarm angeordnet. Durch Einstellen der Entfernung der Achse des Mitnehmerrades von der Lagerachse des Trethebels kann das Übersetzungsverhältnis zwischen dem Schwenkwinkel des Trethebels und dem Drehwinkel des Hinterrades verändert werden. Erfolgt die Verschiebung der Achse des Mitnehmerrades in Stufen, dann wird eine gestufte Übersetzung erreicht, es können also mehrere Gänge angewählt werden. Andererseits kann die Übersetzung auch stufenlos innerhalb eines vorgegebenen Bereichs verändert werden, wenn beispielsweise die Achse des Mitnehmerrades in einem Langloch des Mitnehmerarms des Trethebels verstellbar angeordnet ist.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung näher erläutert wird. In dieser zeigt:

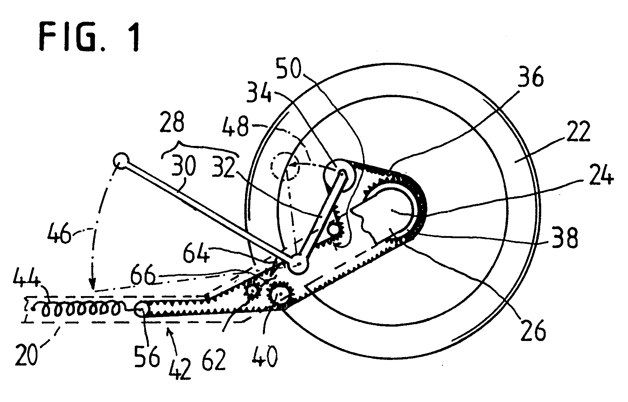

Fig. 1 eine Seitenansicht des rückwärtigen Teils eines Tretrollers.

Von dem Tretroller ist in den Figuren jeweils nur der hintere Bereich mit einem Teil des Rahmens 20 und einem Hinterrad 22 gezeigt. Der Tretroller hat darüberhinaus ein am Rahmen 20 lenkbar angeordnetes Vorderrad mit Lenkgabel und Lenker. Das Hinterrad 22 ist um eine Achse 24 drehbar am rückwärtigen Teil des Rahmens 20 gelagert, dieser ist im rückwärtigen Bereich gabelförmig ausgeführt, die Gabel wird durch zwei Arme 26 gebildet. Am in Fig. 1 vorderen Arm 26 ist innenseitig ein zweiarmiger Trethebel 28 drehbar gelagert, er besteht aus einem Tretarm 30 und einem mit diesem starr verbundenen, etwas kürzeren Mitnehmerarm 32. Um eine verbesserte Lagerung zu erzielen, ist es möglich, den Tretarm 30 U-förmig auszuführen und auch am anderen Arm 26 des Rahmens zu lagern.

Am freien Ende des Mitnehmerarms 32 ist ein Mitnehmerrad 34 frei drehbar um eine parallel zur Achse 24 und damit auch zur Schwenkachse des Trethebels 28 verlaufende Achse angeordnet. Es wird von einem Zugelement 36 umschlungen, das im hier gezeigten Ausführungsbeispiel als Zahnriemen ausgebildet ist.

Mit dem Hinterrad 22 ist über einen nicht dargestellten Freilauf ein als Zahnrad ausgebildetes Antriebsrad 38 verbunden, es steht im Eingriff mit dem Zahnriemen 36. Letzterer ist nach teilweiser Umschlingung des Zahnrades 38 im wesentlichen parallel zum Verlauf des Armes 26 um eine Umlenkrolle 40 geführt, von dort läuft der Zahnriemen unterhalb des im Profil U-förmigen Mittelteils des Rahmens 20. Dort befindet sich eine Umlenkrolle 56, die mit einer als Schraubenzugfeder ausgebildeten Feder 44 verbunden ist, letztere ist ihrerseits am Rahmen 20 festgelegt. Diese Feder 44 belastet den Zahnriemen derart, daß der Trethebel 28 in seine höchste, in Figur 1 dargestellte Position vorbelastet wird.

Das Zugelement 36 ist eine geschlossene Schlaufe, also O-förmig. Es ist eine Sperrscheibe 62 vorgesehen, die vom Zugelement 36 angetrieben wird. Sie ist normalerweise blockiert, hindert also die Bewegung des Zugelementes 36 zu ihr. Wird die Sperrscheibe 62 jedoch freigegeben, so kann sich das geschlossen ausgebildete Zugelement 36 gegenüber der Sperrscheibe 62 bewegen. In dieser Position kann jedoch kein Antrieb stattfinden, bei Betätigung des Trethebels 28 würde das Zugelement 36 einfach umlaufen, ohne einen Antrieb zu bewirken. In dieser Position kann der Tretroller jedoch rückwärts geschoben werden, ohne daß das Zugmittelgetriebe blockiert.

Wird der Tretarm 30 des Trethebels 28 ausgehend von der in Figur 1 dargestellten Ruheposition im Sinne des Pfeiles 46 nach unten gedrückt, so folgt der Mitnehmerarm 32 dieser Bewegung, was durch den Pfeil 48 dargestellt ist. Im Zahnriemen 36 entsteht durch diese Hebelbewegung eine Zugspannung, das Mitnehmerrad 34 wird nach links (Fig. 1) bewegt. Da ein (zweiter) Endbereich 50 des Zahnriemens bei blockierter Sperrscheibe fixiert ist, kann diese Bewegung nur dadurch erfolgen, daß ein erster Endbereich 42 des Zahnriemens 36, der sich im Bereich der Umlenkrolle 56 befindet, nach rechts bewegt wird, wobei sich die Feder 44 längt. Bei dieser Bewegung wird das als Zahnrad ausgebildete Antriebsrad 38 im Gegensinne zum Uhrzeigersinn gedreht und nimmt dabei über den (nicht dargestellten) Freilauf das Hinterrad 22 mit.

Für den Rückhub wird der Tretarm 30 freigegeben, die Feder 44 zieht dann die Anordnung wieder in die in Fig. 1 gezeigte Ausgangsposition zurück. Aufgrund des Freilaufs kann sich das Zahnrad 38 in Richtung des Uhrzeigersinns drehen, ohne daß dies einen Einfluß auf die Bewegung des Hinterrades 22 hat.

In einer bevorzugten Ausführung ist die Sperrscheibe 62 mit einem Trethebel 28 dergestalt verbunden, daß bei in einer Extremposition befindlichem Trethebel 28, beispielsweise der anderen Endposition als sie in Fig. 1 dargestellt ist, die Sperrscheibe 62 freigegeben ist, ansonsten aber, also in allen sonstigen Positionen des Trethebels 28, gesperrt ist. Hierzu springt vom Tretarm ein Sperrnocken 64 nach unten vor, in der tiefsten Position des Tretarms 28 drückt er eine Sperre 66, die die Sperrscheibe normalerweise sperrt, in Freigabestellung, so daß sich die Sperrscheibe 62 frei drehen kann.

Im Ausführungsbeispiel nach Fig. 2 sind zwei separate Trethebel 28 durch eine Feder 60 miteinander verkoppelt. Sie ist als Schraubenfeder ausgeführt, die die Achse, welche die beiden Trethebel 28 verbindet, umschlingt. Ihre beiden Endbereiche greifen jeweils in Löcher, die im Mitnehmerarm vorgesehen sind. Hierdurch wird einerseits ein Energiespeicher erreicht, andererseits unterstützt die Bewegung des angetriebenen Tretarms diejenige des derzeit nicht angetriebenen Tretarms. Dies kann entweder im Sinne einer Mitnahme oder, bei anderer Ausrichtung der Feder 60, einer Gegenläufigkeit der beiden Hebelbewegungen erfolgen. Auf diese Weise können Totpunkte vermieden bzw. in ihrer Wirkung minimiert werden.

Eine Unterstützung der Bewegung des jeweils nicht angetriebenen Tretarms durch die Endphase der Bewegung des jeweils getretenen Tretarms 30 kann auch dadurch erreicht werden, daß ein mechanischer, federbelasteter Mitnehmer an jedem Tretarm vorgesehen ist, der im letzten Stück des Schwenkweges des angetriebenen Tretarms 30 den anderen, zur Zeit nicht angetriebenen Tretarm im gleichen Sinn oder im Gegensinn antreibt.

## Patentansprüche

1. Tretroller mit einem Rahmen (20), an dem ein lenkbares Vorderrad, ein Hinterrad (22) und mindestens ein zwischen diesen angeordneter Trethebel (28) drehbar gelagert sind, wobei die Lagerachsen von Trethebel (28) und Hinterrad (22) parallel zueinander verlaufen und der Trethebel (28) mit einem flexiblen, nicht dehnbaren Zugelement (36), z. B. einer Kette, verbunden ist, das mit einem am Hinterrad (22) angeordneten und mit diesem über einen Freilauf verbundenen Antriebsrad (38) in Eingriff steht und das eine Umlenkrolle (56) umläuft, die mittels einer Feder (44) elastisch so vorbelastet ist, daß der Trethebel (28) in die höchste Position oberhalb des Rahmens (20) gezogen wird,
dadurch gekennzeichnet, daß das Zugelement (36)
- O-förmig geschlossen ausgebildet ist,
- mit einem Mitnehmerrad (34) in Eingriff steht, welches frei drehbar um eine parallel zu den Lagerachsen von Trethebel (28) und Hinterrad (22) laufende Achse am Trethebel (28) angeordnet ist, und
- mit einem Sperrelement, insbesondere einer Sperrscheibe (62) in Eingriff steht, die am Rahmen (20) angeordnet ist und normalerweise drehgesperrt ist, jedoch über eine Betätigung (64, 66) freischaltbar ist, so daß bei gesperrtem Sperrelement das Zugelement (36) am Sperrelement fixiert ist und ein Antrieb des Trethebels (28) ein Drehen des Hinterrades (22) bewirkt, während bei freigeschaltetem Sperrelement das Zugelement (36) gegenüber dem Sperrelement bewegbar ist und einerseits ein Antrieb des Trethebels (28) kein Drehen des Hinterrades (22) bewirkt und andererseits des Antriebsrades (38) lediglich ein Umlaufen des Zugelements (36), aber keine Bewegung des Trethebels (28) bewirkt.

2. Tretroller nach Anspruch 1, dadurch gekennzeichnet, daß das Antriebsrad (38) ein Zahnrad ist und das Zugelement (36) als mit dem Zahnrad in Eingriff stehendes, formschlüssig ausgebildetes Zugmittel, z. B. Zahnriemen oder Kette, ausgebildet ist, und daß die Umlenkrolle (40) über eine als Zugfeder ausgebildete Feder (44) mit dem Rahmen (20) verbunden ist.

3. Tretroller nach Anspruch 1, dadurch gekennzeichnet, daß das Antriebsrad (38) eine Aufwickelspur (52) für das Zugelement (36) ausbildet, die vorteilhafterweise spiralförmig verläuft.

4. Tretroller nach Anspruch 1, dadurch gekennzeichnet, daß zwei identisch ausgebildete, nebeneinander angeordnete Trethebel (28) vorgesehen sind, wobei jedem Trethebel (28) ein eigenes Zugelement (36) zugeordnet ist und jedes Zugelement (36) ein eigenes Antriebsrad (38) umgreift, das über jeweils einen Freilauf mit dem Hinterrad (22) verbunden ist, und daß mit jedem der beiden Trethebel (28) jeweils ein Mitnehmerrad (34) verbunden ist.

5. Tretroller nach Anspruch 4, dadurch gekennzeichnet, daß zwischen den beiden Trethebeln (28) eine Anordnung, insbesondere eine Schenkelfeder oder ein mechanischer Mitnehmer vorgesehen ist, die eine Wechselbewegung der Trethebel (28) erzwingt.

6. Tretroller nach Anspruch 4 oder 5, dadurch gekennzeichnet, daß eine mechanische oder hydraulische Koppelvorrichtung zwischen den beiden Trethebeln (28) vorgesehen ist, die in der Endphase des Arbeitshubs (Tretvorgang) des einen Trethebels eine Kopplung mit dem dann nicht antreibenden anderen Trethebel dergestalt bewirkt, daß der andere Trethebel über seinen Umkehrpunkt und bereits in den Anfang seines Arbeitshubs bewegt wird, und daß die Kopplung unterbrochen wird, wenn der andere Trethebel eine geringe Bewegung in seiner Arbeitshubrichtung durchgeführt hat.

## Claims

1. Scooter including a frame (20), to which a steerable front wheel, a rear wheel (22) and at least one treadle lever (28) provided between them are rotatably mounted in bearings, the bearing axes of treadle lever (28) and rear wheel (22) extending parallel to each other and the treadle lever (28) being connected to a flexible, non-extensible tractive element (36), e.g. a chain, which meshes with a driving wheel (38) positioned on the rear wheel (22), connected to the same via a freewheel, and passes round a return pulley (56), which is elastically pretensioned by means of a spring (44) such as to pull the treadle lever (28) into its highest position above the frame (20), characterised in that the tractive element (36)
- is designed in a closed O-shape,
- meshes with a drag wheel (34) positioned on the treadle lever (28), which freely rotates around an axis extending parallel to the bearing axes of treadle lever (28) and rear wheel (22), and
- meshes with a locking element, specifically a locking disk (62) provided on the frame (20), which normally is locked for rotation but may be released by means of an activation device (64, 66), such that with a locked locking element the tractive element (36) is fixed in its position at the locking element and actuation of the treadle lever (28) will cause the rear wheel (22) to rotate, whereas with a released locking element the tractive element (36) is movable with respect to the locking element and, on the one hand, actuation of the treadle lever (28) will not cause the rear wheel (22) to rotate, and on the other hand actuation of the driving wheel (38) will merely cause the tractive element (36) to pass round, without causing the treadle lever (28) to move.

2. Scooter according to Claim 1, further characterised in that the driving wheel (38) is a toothed wheel, and the tractive element (36) is provided as an interlocking traction means, e.g. a toothed belt or a chain, meshing with the toothed wheel, and that the return pulley (40) is connected to the frame (20) via a spring (44) designed as a tension spring.

3. Scooter according to Claim 1, further characterised in that the driving wheel (38) provides the tractive element (36) with a winding-up track (52), preferably extending in the shape of a spiral.

4. Scooter according to Claim 1, further characterised in that two identically designed treadle levers (28) are provided in parallel, a separate tractive element (36) being associated with each of the treadle levers (28) and each tractive element (36) passing round a separate drive wheel (38), each of which is in turn connected to the rear wheel (22) via a respective free-wheel, and that a separate drag wheel (34) is connected to each of the two treadle levers (28).

5. Scooter according to Claim 4, further characterised in that a device, specifically a leg spring or a mechanical catch, is provided between the two treadle levers (28) to enforce an alternating motion of the treadle levers (28).

6. Scooter according to Claim 4 or 5, further characterised in that a mechanical or hydraulic coupling device is provided between the two treadle levers (28) effecting coupling between the one treadle lever during the final phase of its working stroke (treadle operation) and the other treadle lever not driving in this moment in such a way that the other treadle lever is moved past its reversal point and on into the beginning of its working stroke, and that coupling is discontinued after the other treadle lever has performed a small movement in the direction of its working stroke.

## Revendications

1. Trottinette avec un cadre (20) auquel sont logés tournant autour d'un axe une roue avant dirigeable, une roue arrière (22) et au moins un levier à pied (28) placé entre les deux, les axes de palier du levier à pied (28) et de la roue arrière (22) étant parallèles l'un par rapport à l'autre et le levier à pied (28) étant relié à un élément de traction (36) flexible non extensible, p. ex. une chaîne, se trouvant en prise avec une roue de commande (38) placée à la roue arrière (22) et reliée à celle-ci par un axe libre et tournant autour d'une poulie de guidage (56) tendue initialement de façon élastique par l'intermédiaire d'un ressort (44) pour que le levier à pied (28) soit tiré dans sa position la plus élevée au-dessus du cadre,
caractérisée en ce que l'élément de traction (36)
- a une forme de O fermé,
- se trouve en prise avec une roue d'entraînement (34) placée au levier à pied (28), tournant librement autour d'un axe parallèlelement aux axes de palier du levier à pied (28) et de la roue arrière (22) et
- se trouve en prise avec un élément de blocage, en particulier un disque de blocage (62) placé au cadre (20) et normalement bloqué contre la rotation mais pouvant être libéré par l'intermédiaire d'une commande (64, 66) si bien que, lorsque l'élément de blocage est bloqué, l'élément de traction (36) est fixé à l'élément de blocage et un entraînement du levier à pied (28) produit une rotation de la roue arrière (22) alors que, lorsque l'élément de blocage est libéré, l'élément de traction (36) peut être mû par rapport à l'élément de blocage et, d'un côté, un entraînement du levier à pied (28) ne produit pas de rotation de la roue arrière (22) et, d'un autre côté, un entraînement de la roue de commande (38), produit uniquement une rotation de l'élément de traction (36) mais pas de mouvement du levier à pied (28).

2. Trottinette selon la revendication 1 caractérisée en ce que la roue de commande (38) est une roue dentée et en ce que l'élément de traction (36) est formé en tant que moyen de traction à engagement positif en prise avec la roue dentée, p. ex. courroie dentée ou chaîne et en ce que la poulie de guidage (40) est reliée au cadre (20) par un ressort (44) conçu comme ressort de traction.

3. Trottinette selon la revendication 1 caractérisée en ce que la roue de commande (38) forme une jante d'enroulement (52) pour l'élément de traction (36) qui glisse hélicoïdalement de façon avantageuse.

4. Trottinette selon la revendication 1 caractérisée en ce que sont prévus deux leviers à pied (28) juxtaposés et de forme identique, à chaque levier à pied (28) étant attribué un propre élément de traction (36) et chaque élément de traction (36) serrant une propre roue de commande (38) étant reliée à la roue arrière (22) par respectivement un axe libre et en ce que respectivement une roue d'entraînement (34) est reliée à chacun des deux leviers à pied (28).

5. Trottinette selon la revendication 4 caractérisée en ce qu'entre les deux leviers à pied (28), il est prévu un arrangement, en particulier un ressort spiral ou un entraînement mécanique obligeant un mouvement alternatif des leviers à pied (28).

6. Trottinette selon l'une des revendications 4 ou 5 caractérisée en ce qu'un dispositif de couplage mécanique ou hydraulique est prévu entre les deux leviers à pied (28) produisant, dans la phase finale de la course de travail (opération de poussée) de l'un des leviers à pied, un couplage avec l'autre levier à pied alors non entraîné de telle façon que l'autre levier à pied soit mis en mouvement à son point de retour et dès le début de sa course de travail et que le couplage soit interrompu si l'autre levier à pied a exécuté un léger mouvement dans sa direction de course de travail.
